# EUROPÄISCHE PATENTANMELDUNG

(11) **EP 0 549 971 A1**
(43) Veröffentlichungstag der Anmeldung: **07.07.1993**
(21) Anmeldenummer: 92121475.5
(22) Anmeldetag: 17.12.1992
(51) Int. Cl.: C08G 77/20

(54) **Alkenylgruppenhaltige Organo(Poly)siloxane**

(30) Priorität: 30.12.1991 DE 4143203
(71) Anmelder: WACKER-CHEMIE GMBH, D-81737 München (DE)
(72) Erfinder: Braun, Rudolf, Dr., W-8261 Kastl (DE); Braunsperger, Karl, W-8263 Burghausen (DE)

(57) **Zusammenfassung**

Organo(poly)siloxane aus Einheiten der Formel

[RₐR¹₃₋ₐSiO_{1/2}], [R_{b}R¹_{2-b}SiO_{2/2}] und [R¹SiO_{3/2}],

wobei
- R: gleich oder verschieden sein kann und einen einwertigen organischen Rest, der frei von aliphatischer Kohlenstoff-Kohlenstoff-Mehrfachbindung ist, bedeutet,
- R¹: gleich oder verschieden sein kann und einen einwertigen organischen Rest mit mindestens einer aliphatischen Kohlenstoff-Kohlenstoff-Mehrfachbindung bedeutet,
- a: 0, 1 oder 2 und
- b: 0 oder 1 ist.

## Beschreibung

Die Erfindung betrifft Organo(poly)siloxane, die an jedem Siliciumatom mindestens eine SiC-gebundene Alkenylgruppe aufweisen, ein Verfahren zu deren Herstellung sowie deren Verwendung.

Alkenylgruppenhaltige Organo(poly)siloxane sind bereits bekannt. Beispielsweise sind aus DE-B-1 023 463 (Union Carbide Corp.; ausgegeben am 30. Januar 1958) und DE-A-24 55 502 (General Electric Co.; ausgegeben am 3. Juli 1975) bzw. der entsprechenden US 3,846,464 (ausgegeben am 5. November 1974) cyclische Siloxane bekannt, die an einem jeden Siliciumatom eine SiC-gebundene Vinylgruppe aufweisen. Lineare Methylvinylsiloxane sind in DE-B-1 011 147 (General Electric Co.; ausgegeben am 27. Juni 1957) und DE-A-1 745 342 (Rhone-Poulenc S.A.; ausgegeben am 18. November 1971) bzw. der entsprechenden US 3,498,945 beschrieben. Des weiteren ist aus GB-A-752 371 (Dow Corning Ltd., ausgegeben am 11. Juli 1956) die Herstellung von vinylhaltigem Organopolysiloxanharz durch Hydrolyse von Vinyltriacetoxysilan bekannt.

Gegenstand der vorliegenden Erfindung sind Organo(poly)siloxane aus Einheiten der Formel

[RₐR¹₃₋ₐSiO_{1/2}], [R_{b}R¹_{2-b}SiO_{2/2}] und [R¹SiO_{3/2}],

wobei
- R: gleich oder verschieden sein kann und einen einwertigen organischen Rest, der frei von aliphatischer Kohlenstoff-Kohlenstoff-Mehrfachbindung ist, bedeutet,
- R¹: gleich oder verschieden sein kann und einen einwertigen organischen Rest mit mindestens einer aliphatischen Kohlenstoff-Kohlenstoff-Mehrfachbindung bedeutet,
- a: 0, 1 oder 2 und
- b: 0 oder 1 ist.

Bei dem Rest R handelt es sich vorzugsweise um Kohlenwasserstoffreste mit 1 bis 12 Kohlenstoffatom(en), insbesondere um den Methylrest.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Bei Rest R¹ handelt es sich vorzugsweise um Alkenylreste mit 2 bis 12 Kohlenstoffatomen, insbesondere um den Vinylrest.

Beispiele für Rest R¹ sind der Vinylrest, Allylrest, n-But-1-enylrest, n-But-2-enylrest, n-But-3-enylrest, n-Pent-1-enylrest, n-Pent-2-enylrest, n-Pent-3-enylrest, n-Pent-4-enylrest, n-Hex-1-enylrest, n-Hex-2-enylrest, n-Hex-3-enylrest, n-Hex-4-enylrest, n-Hex-5-enylrest, Cyclohex-1-enylrest, Cyclohex-2-enylrest, Cyclohex-3-enylrest, Cyclohex-4-enylrest und Isopropenylrest.

Der Wert für a ist vorzugsweise 1 oder 2, besonders bevorzugt 2.

Der Wert für b ist vorzugsweise 1.

Herstellungsbedingt kann es sich bei bis zu 50% der Anzahl aller Si-gebundenen Reste in den erfindungsgemäßen Organo(poly)siloxanen um Alkoxyreste, Hydroxygruppen oder Halogenatome handeln.

Vorzugsweise handelt es sich bei den erfindungsgemäßen Organo(poly)siloxanen um solche der Formel

[RₐR¹₃₋ₐSiO_{1/2}]ᵥ [R_{b}R¹_{2-b}SiO_{2/2}]_{y} [R¹SiO_{3/2}]_{z} (I),

wobei R, R¹, a und b jeweils eine der oben dafür angegebenen Bedeutungen haben und
- v: 0,01 bis 0,5, bevorzugt 0,05 bis 0,45, besonders bevorzugt 0,05 bis 0,35,
- y: 0,01 bis 0,7, bevorzugt 0,1 bis 0,6, besonders bevorzugt 0,1 bis 0,5, und
- z: 0,01 bis 0,95, bevorzugt 0,2 bis 0,9, besonders bevorzugt 0,4 bis 0,8, ist,
mit der Maßgabe daß die Summe aus v+y+z in Formel (I) gleich 1 ist.

Vorzugsweise haben die erfindungsgemäßen Organo(poly)siloxane ein Molekulargewicht von 200 bis 100 000, besonders bevorzugt von 300 bis 5 000.

Vorzugsweise sind die erfindungsgemäßen Organo(poly)siloxane bei Raumtemperatur und einem Druck von 900 bis 1100 hPa flüssig und/oder in gängigen apolaren organischen Lösungsmitteln, wie Toluol, Hexan und Xylol löslich, wobei die erfindungsgemäßen Organo(poly)siloxane besonders bevorzugt flüssig sind.

Die erfindungsgemäßen Organo(poly)siloxane haben bei 25°C eine Viskosität von vorzugsweise 10 bis 2.10⁶ mPa·s, besonders bevorzugt 20 bis 2·10⁴ mPa·s.

Beispiele für die erfindungsgemäßen Organo(poly)siloxane sind [ViMe₂SiO_{1/2}]_{0,23}[ViMeSiO_{2/2}]_{0,27}[ViSiO_{3/2}]_{0,50},
[ViMe₂SiO_{1/2}]_{0,13}[ViMeSiO_{2/2}]_{0,30}[ViSiO_{3/2}]_{0,57},
[ViMe₂SiO_{1/2}]_{0,16}[ViMeSiO_{2/2}]_{0,17}[ViSiO_{3/2}]_{0,67} und
[ViMe₂SiO_{1/2}]_{0,30}[ViMeSiO_{2/2}]_{0,20}[ViSiO_{3/2}]_{0,50},
wobei Vi Vinylrest und Me Methylrest bedeutet.

Die erfindungsgemäßen Organo(poly)siloxane können nach allen Verfahren hergestellt werden, nach denen auch bisher Organo(poly)siloxane hergestellt werden konnten. Hierzu sei beispielsweise auf W. Noll "Chemie und Technologie der Silicone", Verlag Chemie, Weinheim, 1968, 2. Aufl., Seite 162 ff verwiesen. So können die erfindungsgemäßen Organo(poly)siloxane beispielsweise durch Hydrolyse der entsprechenden Halogen-, Organyloxy- oder Hydroxysilane hergestellt werden.

Vorzugsweise werden die erfindungsgemäßen
Organo(poly)siloxane durch Umsetzung von
Silan der Formel

R²_{c}R³_{3-c}SiX (II)

und/oder dessen Teilhydrolysat, Silan der Formel

R²_{d}R³_{2-d}SiX₂ (III)

und/oder dessen Teilhydrolysat und Silan der Formel

R³SiX₃ (IV)

und/oder dessen Teilhydrolysat, wobei R² gleich oder verschieden sein kann und eine für R angegebene Bedeutung hat, R³ gleich oder verschieden sein kann und eine für R¹ angegebene Bedeutung hat, X gleich Chloratom oder ein Rest -OR⁴ ist mit R⁴ gleich Wasserstoffatom oder einwertiger organischer Rest, c die gleiche Bedeutung wie a hat und d die gleiche Bedeutung wie b hat, in Anwesenheit von Wasser, Katalysatoren, wie beispielsweise p-Toluolsulfonsäure, und gegebenenfalls organischem Lösungsmittel hergestellt.

Bei Rest R⁴ handelt es sich bevorzugt um Wasserstoffatom und Kohlenwasserstoffreste mit 1 bis 4 Kohlenstoffatom(en), insbesondere Methyl- oder Ethylreste.

Bei X handelt es sich bevorzugt um Rest -OR⁴ mit R⁴ gleich der obengenannten Bedeutung, insbesondere um den Ethoxyrest.

Beispiele für Silan der Formel (II) sind Dimethylvinylethoxysilan, Dimethylvinylmethoxysilan, Chlordimethylvinylsilan, Dimethylvinylpropoxysilan, Dimethyl-1-cyclohexenylethoxysilan und Dimethylvinylsilanol, wobei Dimethylvinylethoxysilan und Dimethylvinylmethoxysilan bevorzugt und Dimethylvinylethoxysilan besonders bevorzugt ist.

Beispiele für Silan der Formel (III) sind Diethoxymethylvinylsilan, Dimethoxymethylvinylsilan, Dipropoxymethylvinylsilan, Dichlormethylvinylsilan, wobei Alkoxysilane bevorzugt und Diethoxymethylvinylsilan besonders bevorzugt ist.

Beispiele für Silan der Formel (IV) sind Triethoxyvinylsilan, Trimethoxyvinylsilan, Tripropoxyvinylsilan, Trichlorvinylsilan, Diethoxychlorvinylsilan, wobei Alkoxysilane bevorzugt und Triethoxyvinylsilan besonders bevorzugt ist.

Bei dem erfindungsgemäßen Verfahren werden vorzugsweise die Silane der Formeln (II) bis (IV) und/oder deren Teilhydrolysate und Katalysator miteinander vermischt und mit Wasser versetzt.

Das erfindungsgemäße Verfahren wird vorzugsweise bei einer Temperatur von 0°C bis 200°C, besonders bevorzugt 10 bis 100°C, und einem Druck der umgebenden Atmosphäre, also etwa zwischen 900 und 1100 hPa, durchgeführt. Das erfindungsgemäße Verfahren kann jedoch auch bei höheren oder niedrigeren Drücken durchgeführt werden.

Die erfindungsgemäßen Organo(poly)siloxane haben den Vorteil, daß sie eine hohe Dichte an SiC-gebundenen, organischen Resten mit mindestens einer aliphatischen Kohlenstoff-Kohlenstoff-Mehrfachbindung haben. Des weiteren haben die erfindungsgemäßen Siloxane den Vorteil, daß sie organische Reste mit mindestens einer aliphatischen Kohlenstoff-Kohlenstoff-Mehrfachbindung in unterschiedlicher chemischer Umgebung, wie zum Beispiel ViMe₂SiO_{1/2}, ViMeSiO und ViSiO_{3/2}, aufweisen. Insbesondere bei Hydrosilylierungsreaktionen zeigen die aliphatisch ungesättigten Reste der erfindungsgemäßen Siloxane zum Teil sehr große Unterschiede in der Reaktivität, was bei zahlreichen Anwendungen genutzt werden kann. Durch geeignete Wahl des Mengenverhältnisses der Silane der Formel (II), (III) und (IV) können erfindungsgemäß Organo(poly)siloxane ganz gezielt mit einem der jeweiligen Anwendung entsprechenden Eigenschaftsbild hergestellt werden.

Die erfindungsgemäßen Organo(poly)siloxane können für alle Zwecke eingesetzt werden, für die auch bisher Organo(poly)siloxane mit mindestens einer aliphatischen Kohlenstoff-Kohlenstoff-Mehrfachbindung eingesetzt worden sind. So eignen sich die erfindungsgemäßen Organo(poly)siloxane zum Beispiel ausgezeichnet als Vernetzer in durch Anlagerung von Si-gebundenem Wasserstoff an aliphatische Kohlenstoff-Kohlenstoff-Mehrfachbindung (sog. Hydrosilylierung) vernetzenden Organopolysiloxanmassen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Es werden die folgenden Abkürzungen verwendet:
- Me:: Methylrest
- Vi:: Vinylrest

### Beispiel 1

380 g Triethoxyvinylsilan, 160 g Diethoxymethylvinylsilan, 130 g Dimethylvinylethoxysilan und 2,00 g p-Toluolsulfonsäure werden in einem Rundkolben mit Rückflußkühler und Tropftrichter vorgelegt und 162 g Wasser während einer Zeitspanne von 2 bis 5 Minuten hinzugetropft, wobei die Innentemperatur auf 57°C ansteigt. Im Anschluß daran wird der gebildete Ethanol bei 120°C und 1000 hPa abdestilliert. Danach werden 250 g Xylol und 8,00 g Kreide hinzugegeben, gut verrührt und bei 120°C und 500 Pa nochmals destilliert. Es werden 330 g einer klaren, leicht gelblichen Flüssigkeit mit einer Viskosität von 80 mm²/s und einem Brechungsindex n_{D}²⁵ von 1,4469 der folgenden durchschnittlichen Formel

[ViMe₂SiO_{1/2}]_{0,23}[ViMeSiO_{2/2}]_{0,27}[ViSiO_{3/2}]_{0,50}

erhalten.

Der Restethoxygehalt beträgt laut NMR-Messung 3,7%, bezogen auf die Gesamtzahl aller SiC-gebundenen Reste.

### Beispiel 2

380 g Triethoxyvinylsilan, 80,0 g Diethoxymethylvinylsilan, 65,0 g Dimethylvinylethoxysilan und 2,00 g p-Toluolsulfonsäure werden in einem Rundkolben mit Rückflußkühler und Tropftrichter vorgelegt und 135 g Wasser während einer Zeitspanne von 2 bis 5 Minuten hinzugetropft, wobei die Innentemperatur auf 57°C ansteigt. Im Anschluß daran wird der gebildete Ethanol bei 120°C und 1000 hPa abdestilliert. Danach werden 250 g Xylol und 8,00 g Kreide hinzugegeben, gut verrührt und bei 120°C und 500 Pa nochmals destilliert. Es werden 218 g einer klaren, leicht gelblichen Flüssigkeit mit einer Viskosität von 12000 mPa·s der folgenden durchschnittlichen Formel

[ViMe₂SiO_{1/2}]_{0,16}[ViMeSiO_{2/2}]_{0,17}[ViSiO_{3/2}]_{0,67}

erhalten.

Der Restethoxygehalt beträgt laut NMR-Messung 4,5%, bezogen auf die Gesamtzahl aller SiC-gebundenen Reste.

### Beispiel 3

380 g Triethoxyvinylsilan, 160 g Diethoxymethylvinylsilan, 65,0 g Dimethylvinylethoxysilan und 2,00 g p-Toluolsulfonsäure werden in einem Rundkolben mit Rückflußkühler und Tropftrichter vorgelegt und 153 g Wasser während einer Zeitspanne von 2 bis 5 Minuten hinzugetropft, wobei die Innentemperatur auf 57°C ansteigt. Im Anschluß daran wird der gebildete Ethanol bei 120°C und 1000 hPa abdestilliert. Danach werden 250 g Xylol und 8,00 g Kreide hinzugegeben, gut verrührt und bei 120°C und 500 Pa nochmals destilliert. Es werden 260 g einer klaren, leicht gelblichen Flüssigkeit mit einer Viskosität von 4540 mm²/s der folgenden durchschnittlichen Formel

[ViMe₂SiO_{1/2}]_{0,13}[ViMeSiO_{2/2}]_{0,30}[ViSiO_{3/2}]_{0,57}

erhalten.

Der Restethoxygehalt beträgt laut NMR-Messung 4,0 %, bezogen auf die Gesamtzahl aller SiC-gebundenen Reste.

## Patentansprüche

1. Organo(poly)siloxane aus Einheiten der Formel
[RₐR¹₃₋ₐSiO_{1/2}], [R_{b}R¹_{2-b}SiO_{2/2}] und [R¹SiO_{3/2}],
wobei
R gleich oder verschieden sein kann und einen einwertigen organischen Rest, der frei von aliphatischer Kohlenstoff-Kohlenstoff-Mehrfachbindung ist, bedeutet,
R¹ gleich oder verschieden sein kann und einen einwertigen organischen Rest mit mindestens einer aliphatischen Kohlenstoff-Kohlenstoff-Mehrfachbindung bedeutet,
a 0, 1 oder 2 und
b 0 oder 1 ist.

2. Organo(poly)siloxane gemäß Anspruch 1, dadurch gekennzeichnet, daß R die Bedeutung von Methylrest hat.

3. Organo(poly)siloxane gemäß Anspruch 1 oder 2, dadurch gekennzeichnet, daß R¹ die Bedeutung von Vinylrest hat.

4. Organo(poly)siloxane gemäß einem oder mehreren der Ansprüche 1 bis 3, dadurch gekennzeichnet, daß es sich um solche der Formel
[RₐR¹₃₋ₐSiO_{1/2}]ᵥ [R_{b}R¹_{2-b}SiO_{2/2}]_{y} [R¹SiO_{3/2}]_{z} (I),
handelt, wobei
R gleich oder verschieden sein kann und einen einwertigen organischen Rest, der frei von aliphatischer Kohlenstoff-Kohlenstoff-Mehrfachbindung ist, bedeutet,
R¹ gleich oder verschieden sein kann und einen einwertigen organischen Rest mit mindestens einer aliphatischen Kohlenstoff-Kohlenstoff-Mehrfachbindung bedeutet,
a 0, 1 oder 2 ist,
b 0 oder 1 ist,
v 0,01 bis 0,5 ist,
y 0,01 bis 0,7 und
z 0,01 bis 0,95 ist,
mit der Maßgabe daß die Summe aus v+y+z in Formel (I) gleich 1 ist.

5. Organo(poly)siloxane gemäß Anspruch 4, dadurch gekennzeichnet, daß
v 0,05 bis 0,45 ist,
y 0,1 bis 0,6 und
z 0,2 bis 0,9 ist,
mit der Maßgabe daß die Summe aus v+y+z in Formel (I) gleich 1 ist.

6. Organo(poly)siloxane gemäß einem oder mehreren der Ansprüche 1 bis 5, dadurch gekennzeichnet, daß sie bei 25°C eine Viskosität von 10 bis 2·10⁶ mPa·s haben.

7. Verfahren zur Herstellung von Organo(poly)siloxanen gemäß einem oder mehreren der Ansprüche 1 bis 6 durch Umsetzung von
Silan der Formel
R²_{c}R³_{3-c}SiX (II)
und/oder dessen Teilhydrolysat, Silan der Formel
R²_{d}R³_{2-d}SiX₂ (III)
und/oder dessen Teilhydrolysat und Silan der Formel
R³SiX₃ (IV)
und/oder dessen Teilhydrolysat, wobei
R² gleich oder verschieden sein kann und einen einwertigen organischen Rest, der frei von aliphatischer Kohlenstoff-Kohlenstoff-Mehrfachbindung ist, bedeutet,
R³ gleich oder verschieden sein kann und einen einwertigen organischen Rest mit mindestens einer aliphatischen Kohlenstoff-Kohlenstoff-Mehrfachbindung bedeutet,
X gleich Chloratom oder ein Rest -OR⁴ ist mit R⁴ gleich Wasserstoffatom oder einwertiger organischer Rest,
c 0, 1 oder 2 und
d 0 oder 1 ist,
in Anwesenheit von Wasser, Katalysatoren und gegebenenfalls organischem Lösungsmittel.

8. Verfahren nach Anspruch 7, dadurch gekennzeichnet, daß X gleich Rest -OR⁴ ist, wobei R⁴ die obengenannte Bedeutung hat.

9. Verwendung der Organo(poly)siloxane gemäß einem oder mehreren der Ansprüche 1 bis 6 oder hergestellt nach Anspruch 7 oder 8 als Vernetzer in durch Anlagerung von Si-gebundenem Wasserstoff an aliphatische Kohlenstoff-Kohlenstoff-Mehrfachbindung vernetzenden Organopolysiloxanmassen.
